# EUROPEAN PATENT SPECIFICATION

(11) **EP 2 179 093 B1**
(45) Date of publication and mention of the grant of the patent: **12.09.2012**
(21) Application number: 07825421.6
(22) Date of filing: 17.07.2007
(51) Int. Cl.: B60N 2/24, B60N 2/46, E02F 9/16, E02F 9/20, B66C 13/56

(54) **CONSTRUCTION EQUIPMENT MACHINE COMPRISING A CABIN WITH ADVANCED ERGONOMICS**
BAUMASCHINE MIT EINEM FÜHRERHAUS MIT FORTSCHRITTLICHER ERGONOMIE
MACHINE D'ÉQUIPEMENT DE CONSTRUCTION À ERGONOMIE AMÉLIORÉE

(43) Date of publication of application: 28.04.2010
(73) Proprietor: VOLVO COMPACT EQUIPMENT SAS, 01300 Belley (FR)
(72) Inventor: CAILLIERET, Roger, F-01300 Brens (FR)
(74) Representative: Putet, Gilles
(86) International application number: PCT/IB2007/003122
(87) International publication number: WO 2009/010818

(56) References cited:
- EP-A- 1 484 274
- JP-A- 8 040 689
- JP-A- 10 280 481
- US-A- 4 059 196
- US-A- 4 392 546
- US-A- 5 072 905
- US-A1- 2003 221 402

## Description

### Technical field

The invention relates to the field of construction equipment machines. It can be for example implemented in such machines as excavators, cranes, back-hoe loaders, skid-steer loaders, motor-graders, road construction machines, etc...

### Background art

Construction equipment machines have in common to be equipped with at least one work implement. The work implement has a variety of possible movements to be able to work as efficiently as possible in a wide variety of field operating conditions. Some construction equipment machines are inherently mobile machines (such as loaders and motor-graders), in that the work implement is essentially used when the machine is traveling, while other machines are more static, such as excavators and cranes, even though excavators are also mobile machines. In any case, these machines also have in common to be man-operated. Indeed, the operator controls the work implement, which usually involves controlling independently four to six main directions of movement, plus possibly other additional directions of movement and other specific functions. On mobile machines, the operator also needs to control the travel of the machine, which means controlling the direction and the speed. More and more, the operator controls at least the main functions of the machine through the use of joystick controllers, up to three or four of them, plus additional buttons and knobs.

While the machines have become more and more complex and have been equipped more and more with systems to assist the operator, the end result produced by the machine is nevertheless still very much dependent on the operator's skill and performance. Of course, skill comes through specific training, but it has become more and more apparent that, to maintain a high quality of work along the whole of an operator's workday, it is necessary to produce a machine which is ergonomically well designed and comfortable.

Most construction equipment machines have an operator control station in the form of an open or closed operator cabin wherein the operator is seated. Depending on the machine, the controls which the operator has to manipulate to operate the machine can be fixed on a console in front of him (knowing that the operator seat may have several work positions for the operator, such as in the case of a backhoe loader where the loader is on the front of the machine and the backhoe is located on the rear side of the machine). In some machines, it is provided that the seat is equipped with armrests which are more or less linked to the seat and arranged longitudinally on each side of the seat. In some of these machines, the armrests may comprise a joystick controller. Such is frequently the case in the field of excavators. Indeed, these machines are typically equipped with a backhoe comprising an arm, a dipper and a bucket which can be moved one with respect to the other through the use of two joystick controllers, one of the controllers also controlling the slew movement of the machine's cabin. Since these two controllers are the most used controllers for such machine, it is frequent to have one of these controllers mounted at the front extremity of each seat armrest. Such a layout is favorable in that the principal controllers can be manipulated by the operator while keeping his forearms on the armrests.
Nevertheless, such a layout is not entirely satisfactory. Indeed, the other controllers (such as one or several controllers) are usually not located near the principal controllers so that, whenever the operator needs to manipulate these other controllers, he usually has to change his positions and cannot usually continue to use his armrests. Moreover, mounting the controllers on the seat armrest is not necessarily very practical when it comes to connecting the controllers, especially for hydraulic controllers.

Therefore, it is an object of the invention to provide a new cabin interior layout for a construction equipment machine in order to optimize ergonomics and operator comfort.

Document JP-08040689 shows a construction equipment machine having a joystick controller mounted on a tiltable box in front of the operator seat

### Summary of the invention

To this end, one aspect of the invention is to provide for a construction equipment machine having:
- at least one work implement;
- a cabin to accommodate an operator of the machine;
- a control console which is located in the cabin in front of the operator;
- at least a first controller to control the operation of the work implement, said first controller being mounted on the control console;
- at least a first armrest which can be used by the operator when operating the first controller;
characterized in that said armrest is mounted on said control console; in that at least a second controller and a second associated armest are mounted on the control console, in that each armrest has a main axis which is contained within a plane which is at an angle comprised within 20 to 45 degrees with respect to a saggital plane of the operator, and in that the first and second controllers are joystick-type controllers with a lever-like control member having a main axis, and in that the main axis of the lever-like control member and the main axis of the corresponding armrest are substantially coplanar.

### Description of figures

The invention will be best understood from the following detailed description which refers to the appended drawings in which:
- Figure 1 is a schematic side view of an operator control station for a construction equipment machine according to the invention;
- Figure 2 and Figure 3 are respectively schematic top and front views of the operator control station of Figure 1;
- Figure 4 and 5 are two schematic side views showing an example of a retracting mechanism for pivoting an armrest from a non-use position to a use position.

### Description of the invention

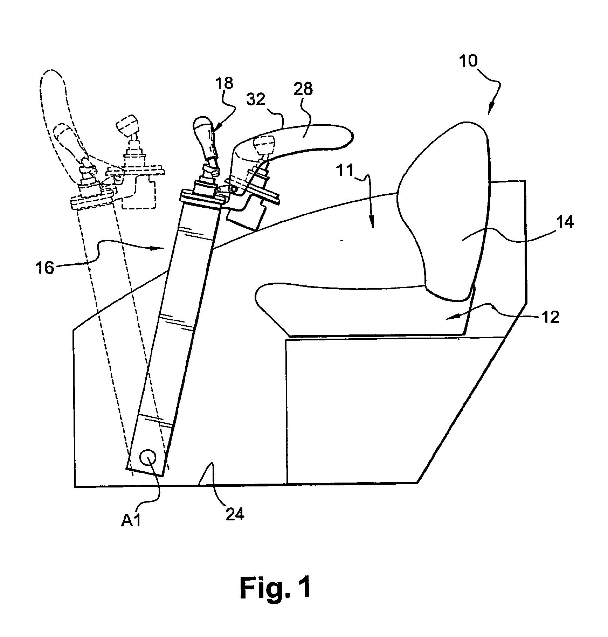

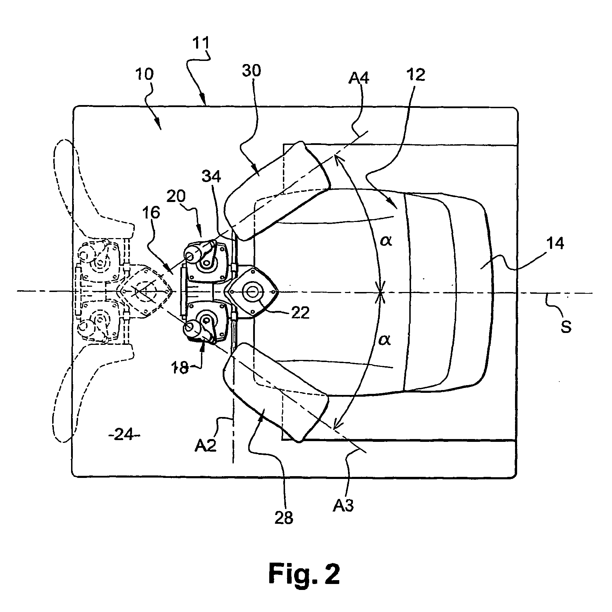

Figure 1 to 3 represent respectively schematic side, top and front views of an operator control station 10 for a construction equipment machine according to the invention, said construction machine being at least equipped with one work implement, such as a backhoe (not represented). The operator control station 10 is preferably part of a cabin structure 11 of the machine, which can be an open-air cabin, or a more or less closed cabin. The cabin itself can be fixed with respect to the machine's chassis (as in a backhoe loader for example), or mobile with respect to the chassis (as in an excavator for example). It comprises preferably a seat 12 for the operator which is shown here with a backrest 14, possibly reclining. The seat 12 can be adjustable especially in height and length, although, as will be explained hereinafter, the specific design of the operator cabin is such that it can be used with a fixed seat. For convenience, it will hereinafter be used the convention according to which the front of the operator control station will be on the left hand side of Figures 1 and 2, while the back will be on the right hand side, although this might not correspond to the machine's main direction, especially in the case of a backhoe loader where the backhoe and the corresponding controls are located on the rear side of the machine, with the seat being able to pivot 180 degrees from a drive and load position to a backhoe position.

According to the invention, the operator control station 10 comprises, in front of the operator's seat 12, a control console 16 on which is mounted at least one hand-operated controller 18, 20, 22 by which the operator can control the operation of the work implement. The control console could be a fixed structure with respect to the cabin, for example a fixed dashboard. In a more sophisticated implementation of the invention, the control console will be displaceable with respect to the cabin. In the example shown, the control console 16 is in the form of a tower which extends substantially vertically from the floor 24 of the cabin. Control tower 16 has the shape of a pillar which is articulated by its lower extremity on the floor of 24 of the cabin around a horizontal and transversal axis A1 so as to be adjustable between a work position represented in solid lines on figures 1-3, and the non-work position represented in dashed lines on these figures. More precisely, the lower extremity of the control tower 16 is articulated near the front end of the floor of the cabin, so that in its non-work position, the tower is inclined rearwardly by an angle which can range for example from 10 to 30 degrees with respect to the vertical. The upper extremity of the control tower has a widened portion on which is mounted a platform 17. The platform 17 accommodates the at least one controller. In the case shown on the figures, the platform 17 can accommodate three joystick controllers 18, 20, 22, a first and a second 18, 20 of which are intended to control the work implement (and, in the case of an excavator, the slew movement of the cabin with respect to the chassis), while the third one 22 is intended to control the travel direction and speed of the machine.

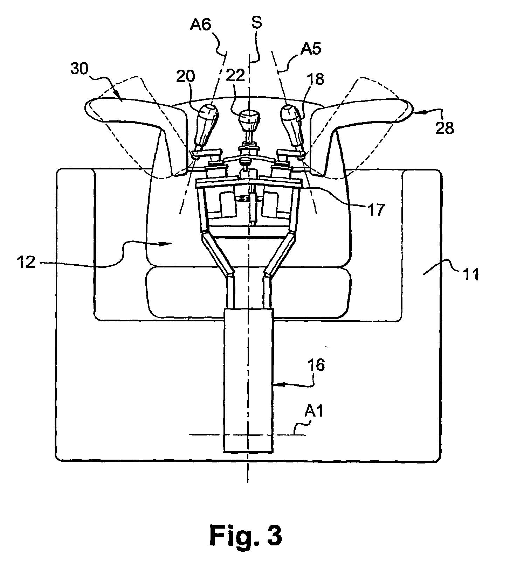

According to an advantageous feature of the embodiment shown on the figures, the first, second and third controllers are mounted in a triangular configuration when viewed from above (see figure 3), the third controller being located behind the transversal plane defined by the first and second controllers. As can be seen from the top view, the third controller 22 is preferably located substantially on the sagittal plane S of the operator, and the first and second controllers 18, 20 are located symmetrically each on one side of the sagittal plane S. Ideally, the three controllers are located as close as possible to each other without interfering with each other. For example, using standard joystick controllers conventionally used in the field of construction equipment machinery, the first two controllers 18, 20 can be spaced apart by approximately 20 centimeters transversely, while the third controller 22 can be located something like 10 centimeters behind the transversal plane defined by the first two controllers. Thanks to this arrangement, the hand of the operator has only a minimum distance to travel when going from one controller to the other (especially from one of the first two controllers to the third one, or the corresponding reverse movement). Moreover, in some special cases when the operator needs to act on all three controllers at the same time, he can do so quite conveniently with his both hands.

In the example shown, each controller is a joystick type controller with a lever-like control member which is movable along the at least two dimensions. Nevertheless, the third controller controlling the travel speed and direction of the machine could be implemented in the form of two control levers being each movable along one dimension. For example, each lever could control respectively a right and a left propulsion unit. In the example shown, the controllers are conventional hydraulic joystick-controllers, but other types of controllers could also be used, especially any kind of electric controller.

Preferably, the control tower 16 has an adjustable work position. First of all, it is preferably adjustable in height. For example, the control tower 16 can be divided into two collapsible parts (not shown in the figures) in order to increase or decrease the height of the upper extremity where the controllers are located with respect to the floor of the cabin. Also, the work position is preferably adjustable along the longitudinal direction. This can be for example implemented by providing an adjusting mechanism which allows adjusting the inclination of the control tower 16 with respect to the vertical when it is in its work position. These two adjustment possibilities make it possible for the operator to perfectly adjust the position of the controllers 18, 20, and 22 with respect to the seat 12 so that they are ideally situated from an ergonomics point of view, whether or not the position of the seat 12 can itself be adjusted.

Ideally, the work position of the control tower 16 will be adjustable so that the controllers 18, 20, 22 are located fairly near to the operator, for example approximately above the front edge of the seat 12, just above the legs of the driver when he is seated. In such a case, the pillar shape of the control tower as shown on the figures is advantageous because the operator can have his knees located on each side of the pillar part of the tower without having to open the angle between his legs too much, which could otherwise be uncomfortable to the operator. Of course, such location of the controllers could be problematic in terms of entry and exit of the operator but, as shown in the illustrated embodiment, this problem that can be solved by providing that the control tower be tiltable to the non-work position where it does not anymore impede or restrict entry and exit. In the embodiment shown, the control tower can be tilted forwardly up to a substantially vertical position, thereby retracting the control tower and the controllers away from the seat 12, towards the front. Preferably, in the case where the work position of the control tower is adjustable, the tilt adjustment mechanism of the control tower will be constructed so as to keep the memory of the operator's preferred work position of the control tower, so that he does not need a to adjust this position each time he moves the control tower between its work and non-work positions to enter and exit the cabin.

These adjustments make it possible for an operator to find a comfortable position, whatever his morphology. Nevertheless, whatever adjustment possibilities are provided to adapt the position of the controllers with respect to the position of the seat, each individual operator may have his own preferences (for example relatively lower or higher controls, or longitudinally relatively further or closer to him). On the other hand, there is no doubt that, to provide the most comfortable work position, it is necessary to provide armrests perfectly positioned to provide adequate support for the arms of the operator when he is working.

The operator control station of the machine is equipped with at least one armrest corresponding to at least a one controller, preferably two armrests 28, 30 corresponding to the two most used controllers, which, in the case of an excavator will be the two first controllers 18, 20. In order for those armrests to be ideally situated with respect to the controllers, the invention provides that the at least one armrest is mounted on the control console. Thanks to this feature, it is possible to make sure that the armrest is located at an optimum position with respect to the controller. Therefore, when the operator grips the lever of a controller, the corresponding armrest is ideally located right under his forearm. In the depicted embodiment, each armrest extends rearwardly from the control console.

As can be seen on the figures, each armrest has a top resting surface 32 which extends essentially along a substantially horizontal or slightly inclined plane, approximately at the same vertical level that the lever of the corresponding controller. Preferably, the top resting surface 32 is slightly curved so as to be dome shaped.

Preferably, the position of each armrest with respect to the control console is adjustable. In the example shown, it is provided that the top resting surface of the armrest can be adjusted in terms of inclination around a horizontal and transversal axis A2. As a result, the operator can adjust the armrest so that its top resting surface 32 follows almost exactly a line going from his elbow to the corresponding most used controller handgrip. Depending on the height at which the operator wishes to have the controllers, the top resting surface 32 of each armrest can therefore be either horizontal or slightly inclined forwardly or backwardly around a transversal axis.

According to the specific design of the operator control station depicted in the figures, where the controllers are very close to each other and to the user in the work position, each armrest 28, 30 has a top resting surface 32 which is substantially oval or rectangular when viewed from above, having a main axis (respectfully A3, A4) which is at an angle α with respect to the sagittal plane S of the operator. This angle α, measured in a horizontal plane, can for example be comprised within the range of approximately 20 to 45 degrees.

Preferably, if the first and/or second controller is a joystick-type controller with a lever-like control member having a main axis (A5, A6 see Figure 3), then the main axis A5, A6 of the lever-like control member and the main axis A3, A4 of the corresponding armrest should be substantially coplanar. In the depicted embodiment, where there are two controllers and two corresponding armrests, the controllers being quite close to the sagittal plane of the operator in front of him, the controllers and the corresponding armrests are therefore arranged in a V-shaped configuration pointed towards the front, when viewed from above, the controllers being substantially at the point of the V. As a result, the operator's wrists are in an ideal position corresponding to a natural orientation.

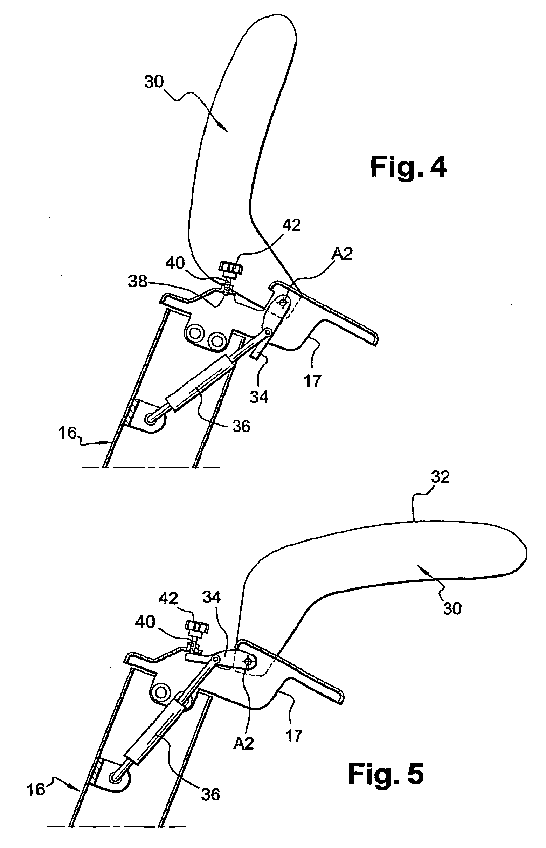

More precisely, in the example shown, each armrest is articulated around a transversal horizontal axis A2 by its front extremity on the upper extremity of the control tower, near of the location of the corresponding controller. Thanks to this articulation, each armrest can be moved from a use position as shown in figure 5 to a non-use position shown on figure 4. In the non-use position of figure 4, the armrest extends upright, substantially parallel to the main orientation of the control tower 16 so as to be retracted away from the operator. Combined with the possibility to retract the control tower 16 forwardly to the non-work position, this insures very easy entry and exit in and out of the cabin.

In the case where there are two armrests 28, 30, it can be provided of that each armrest can be lifted separately to its non-use position. In the example shown on Figures 4 and 5, those armrests are mounted on a common articulated bracket 34 so as to be lifted together to their non-use position and to be lowered back together to their use position. As can be seen on the figures 4 and 5, the mounting bracket 34 for the armrests is articulated directly on the platform 17 of the control tower 16, and it is linked to one end of a gas cylinder 36, the other end of which is linked to the control tower 16. The gas cylinder acts on the bracket 34 so as to force elastically the bracket and the armrests either to their use position or to their non-use position in a bi-stable manner. Those positions are defined by the bracket 34 coming into contact with end stops provided on the control tower. Preferably, at least the end stop corresponding to the use position of the armrests is adjustable so as to provide an easy adjustment of the use position. In the embodiment shown, the adjustable end stop is simply the extremity 38 of a threaded rod 40 screwed on the control tower platform 17, and the position of which the operator can adjust by turning a knob 42 mounted at the other end of the threaded rod. Of course, the skilled man in the art could devise many other equivalent mechanisms to ensure that an armrest can have an adjustable use position, and/or be moveable from a use position to a non-use position.

Although it is not provided for in the depicted embodiment, it could be also desirable to adjust the angle of each armrest with respect to the sagittal plane of the operator.

In the case where the control console is displaceable, like the control tower 16 of the depicted embodiment, it is of interest that the armrest moves together with the console. Of course, if the armrests are mounted directly on the control console, the armrests move automatically with the console. But it could also be that the console would be made in several parts, not all of them being movable, or that the armrests are mounted indirectly on the console. In such a case, it is desirable that the armrests move with the controllers.

Preferably, it will be provided that when the armrest is moved from its use to its non-use position, a security feature is triggered. This security feature can for example render the controllers on the control tower inoperative. It could also simply shut down the entire machine. Also, it can be provided that this security feature is connected to a latching mechanism which permits or not the tilting of the control tower towards its non-work position. It could also be provided that a first security feature is triggered when at least one armrest is lifted from its use position (for example render the controllers inoperative), and that a second security feature is triggered when the control tower is tilted away from its work position (for example shut down the machine). These security features can be implemented through mechanical, hydraulic, or electrical devices.

## Claims

1. A construction equipment machine having:
- at least one work implement;
- a cabin (11) to accommodate an operator of the machine;
- a control console (16) which is located in the cabin in front of the operator;
- at least a first controller (18, 20) to control the operation of the work implement, said first controller being mounted on the control console (16);
- at least a first armrest (28, 30) which can be used by the operator when operating the first controller;
**characterized in that** said armrest (28, 30) is mounted on said control console (16), **in that** at least a second controller and a second associated armrest are mounted on the control console, **in that** each armrest has a main axis which is contained within a plane which is at an angle comprised within 20 to 45 degrees with respect to a sagittal plane of the operator, and **in that** the first and second controllers are joystick-type controllers with a lever-like control member having a main axis, and **in that** the main axis of the lever-like control member and the main axis of the corresponding armrest are substantially coplanar.

2. A machine according to claim 1, **characterized in that** the second controller (20) and the second armrest (30) are arranged symmetrically of the first controller (18) and of the first armrest (30) on the opposite side of a sagittal plane (S) of the operator.

3. A machine according to claim 1 or 2, **characterized in that** said armrest (28, 30) is moveably mounted on said control console (16) between a use position and a non-use position.

4. A machine according to claim 3, **characterized in that** when the armrest (28, 30) is moved from its used to its non-used position, a security feature is triggered.

5. A machine according to any preceding claim, **characterized in that** the use position of the armrest with respect to the control console is adjustable.

6. A machine according to any preceding claim, **characterized in that** a third controller (22) is also mounted on the control console (16), **in that** the third controller controls the travel speed and direction of the machine through a propulsion system, and **in that** the first, second and third controllers are mounted in a triangular configuration when viewed from above, the third controller being located behind a plane defined by the first and second controllers.

7. A machine according to any preceding claim, **characterized in that** the control console (16) is adjustable in height.

8. A machine according to any preceding claim, **characterized in that** the control console (16) has an adjustable work position along a longitudinal direction.

9. A machine according to any preceding claim, **characterized in that** the work position of the control console (16) is adjustable so that the controllers (18, 20, 22) are located approximately above the front edge of a seat (12), just above the legs of the driver when he is seated.

10. A machine according to claim 8 or 9, **characterized in that** the adjustment of the control console work position along a longitudinal direction is achieved by tilt adjustment of the control console (16).

11. A machine according to any preceding claim, **characterized in that** the control console (16) can be displaced from a work position to a non-work position.

12. A machine according to claim 11, **characterized in that** the control console (16) can be tilted forwardly from its work position to its non-work position.

## Patentansprüche

1. Baumaschine mit
- wenigstens einem Arbeitsgerät;
- einer Kabine (11) zur Aufnahme einer Bedienungsperson der Maschine;
- einer Steuerkonsole (16), die in der Kabine vor der Bedienungsperson angeordnet ist,
- wenigstens einem ersten Steuergerät (18, 20) zur Steuerung des Betriebs des Arbeitsgeräts, wobei das erste Steuergerät an der Steuerkonsole (16) angebracht ist;
- wenigstens einer ersten Armlehne (28, 30), die durch die Bedienungsperson verwendet werden kann, wenn sie das erste Steuergerät bedient;
**dadurch gekennzeichnet, dass** die Armlehne (28, 30) an der Steuerkonsole (16) angebracht ist, dass wenigstens ein zweites Steuergerät und eine zweite zugeordnete Armlehne an der Steuerkonsole angebracht sind, dass jede Armlehne eine Hauptachse aufweist, die in einer Ebene enthalten ist, die bezüglich einer Sagittalebene der Bedienungsperson in einem Winkel zwischen 20 und 45 Grad verläuft, und dass das erste und das zweite Steuergerät Joystick-Steuergeräte mit einem hebelähnlichen Steuerelement sind, das eine Hauptachse aufweist, und dass die Hauptachse des hebelähnlichen Steuerelements und die Hauptachse der entsprechenden Armlehne im Wesentlichen koplanar sind.

2. Maschine nach Anspruch 1, **dadurch gekennzeichnet, dass** das zweite Steuergerät (20) und die zweite Armlehne (30) symmetrisch zu dem ersten Steuergerät (18) und der ersten Armlehne (30) auf der entgegengesetzten Seite einer Sagittalebene (S) der Bedienungsperson angeordnet sind.

3. Maschine nach Anspruch 1 oder 2, **dadurch gekennzeichnet, dass** die Armlehne (28, 30) bewegbar an der Steuerkonsole (16) zwischen einer Verwendungsposition und einer Nichtverwendungsposition angebracht ist.

4. Maschine nach Anspruch 3, **dadurch gekennzeichnet, dass**, wenn die Armlehne (28, 30) aus ihrer Verwendungs- in ihre Nichtverwendungsposition bewegt wird, ein Sicherheitsmerkmal ausgelöst wird.

5. Maschine nach irgendeinem vorhergehenden Anspruch, **dadurch gekennzeichnet, dass** die Verwendungsposition der Armlehne bezüglich der Steuerkonsole einstellbar ist.

6. Maschine nach irgendeinem vorhergehenden Anspruch, **dadurch gekennzeichnet, dass** ein drittes Steuergerät (22) ebenfalls an der Steuerkonsole (16) angebracht ist, dass das dritte Steuergerät die Fahrgeschwindigkeit und die Richtung der Maschine durch ein Antriebssystem steuert, und dass das erste, zweite und dritte Steuergerät von oben betrachtet in einer dreieckförmigen Konfiguration angebracht sind, wobei das dritte Steuergerät hinter einer Ebene angeordnet ist, die durch das erste und zweite Steuergerät gebildet wird.

7. Maschine nach irgendeinem vorhergehenden Anspruch, **dadurch gekennzeichnet, dass** die Steuerkonsole (16) in der Höhe einstellbar ist.

8. Maschine nach irgendeinem vorhergehenden Anspruch, **dadurch gekennzeichnet, dass** die Steuerkonsole (16) eine einstellbare Arbeitsposition entlang einer Längsrichtung aufweist.

9. Maschine nach irgendeinem vorhergehenden Anspruch, **dadurch gekennzeichnet, dass** die Arbeitsposition der Steuerkonsole (16) so einstellbar ist, dass die Steuergeräte (18, 20, 22) ungefähr oberhalb der Vorderkante eines Sitzes (12) angeordnet sind, genau über den Beinen des Fahrers, wenn er sich gesetzt hat.

10. Maschine nach Anspruch 8 oder 9, **dadurch gekennzeichnet, dass** die Einstellung der Arbeitsposition der Steuerkonsole entlang einer Längsrichtung durch Neigungseinstellung der Steuerkonsole (16) erreicht wird.

11. Maschine nach irgendeinem vorhergehenden Anspruch, **dadurch gekennzeichnet, dass** die Steuerkonsole (16) aus einer Arbeitsposition in eine Nichtarbeitsposition verschoben werden kann.

12. Maschine nach Anspruch 11, **dadurch gekennzeichnet, dass** die Steuerkonsole (16) aus ihrer Arbeitsposition in die Nichtarbeitsposition nach vorne gekippt werden kann.

## Revendications

1. Engin de chantier, comprenant :
- au moins un outil ;
- une cabine (11) servant à accueillir un opérateur de l'engin ;
- un pupitre de commande (16) placé dans la cabine devant l'opérateur ;
- au moins un premier organe de commande (18, 20) servant à commander le fonctionnement de l'outil, ledit premier organe de commande étant monté sur le pupitre de commande (16) ;
- au moins un premier accoudoir (28, 30) susceptible d'être utilisé par l'opérateur lorsqu'il actionne le premier organe de commande ;
l'engin étant **caractérisé en ce que** ledit accoudoir (28, 30) est monté sur ledit pupitre de commande (16), **en ce qu'**au moins un deuxième organe de commande et un deuxième accoudoir associé sont montés sur le pupitre de commande, **en ce que** chaque accoudoir possède un axe principal contenu dans un plan formant un angle compris entre 20 et 45 degrés avec un plan sagittal de l'opérateur, et **en ce que** les premier et deuxième organes de commande sont des organes de commande du type manche à balai comportant un élément de commande semblable à un levier possédant un axe principal, et **en ce que** l'axe principal de l'élément de commande semblable à un levier et l'axe principal de l'accoudoir correspondant sont sensiblement coplanaires.

2. Engin selon la revendication 1, **caractérisé en ce que** le deuxième organe de commande (20) et le deuxième accoudoir (30) sont agencés symétriquement par rapport au premier organe de commande (18) et au premier accoudoir (30) du côté opposé d'un plan sagittal (S) de l'opérateur.

3. Engin selon la revendication 1 ou 2, **caractérisé en ce que** ledit accoudoir (28, 30) est monté mobile sur ledit pupitre de commande (16) entre une position utilisée et une position non utilisée.

4. Engin selon la revendication 3, **caractérisé en ce qu'**un dispositif de sécurité se déclenche lorsque l'accoudoir (28, 30) est déplacé de sa position utilisée à sa position non utilisée.

5. Engin selon l'une quelconque des revendications précédentes, **caractérisé en ce que** la position utilisée de l'accoudoir par rapport au pupitre de commande est réglable.

6. Engin selon l'une quelconque des revendications précédentes, **caractérisé en ce qu'**un troisième organe de commande (22) est également monté sur le pupitre de commande (16), **en ce que** le troisième organe de commande commande la vitesse et la direction d'avancement de l'engin grâce à un système de propulsion, et **en ce que** les premier, deuxième et troisième organes de commande sont montés en configuration triangulaire en vue de dessus, le troisième organe de commande étant placé derrière un plan défini par les premier et deuxième organes de commande .

7. Engin selon l'une quelconque des revendications précédentes, **caractérisé en ce que** le pupitre de commande (16) est réglable en hauteur.

8. Engin selon l'une quelconque des revendications précédentes, **caractérisé en ce que** le pupitre de commande (16) possède une position de service réglable suivant une direction longitudinale.

9. Engin selon l'une quelconque des revendications précédentes, **caractérisé en ce que** la position de service du pupitre de commande (16) est réglable de manière à placer les organes de commande (18, 20, 22) à peu près au-dessus du bord avant d'un siège (12), juste au-dessus des jambes de l'opérateur en position assise.

10. Engin selon la revendication 8 ou 9, **caractérisé en ce que** le réglage de la position de service du pupitre de commande suivant une direction longitudinale s'effectue par réglage de l'inclinaison du pupitre de commande (16).

11. Engin selon l'une quelconque des revendications précédentes, **caractérisé en ce que** le pupitre de commande (16) peut être déplacé d'une position de service à une position hors service.

12. Engin selon la revendication 11, **caractérisé en ce que** le pupitre de commande (16) peut être incliné vers l'avant de sa position de service à sa position hors service.
